# EUROPÄISCHE PATENTSCHRIFT

(11) **EP 0 548 544 B1**
(45) Veröffentlichungstag und Bekanntmachung des Hinweises auf die Patenterteilung: **23.02.1994**
(21) Anmeldenummer: 92119759.6
(22) Anmeldetag: 20.11.1992
(51) Int. Cl.: F16L 41/08, E03F 3/04

(54) **Vorrichtung zum wasserdichten Anschluss von Kunststoff-Kanalrohren an unterirdische Bauwerke**
Device for water-proof connection of plastic sewerage pipes to subterraneous constructions
Dispositif pour raccordement étanche de tuyaux d'égout en plastique aux constructions souterraines

(30) Priorität: 21.12.1991 DE 9115956 U
(43) Veröffentlichungstag der Anmeldung: 30.06.1993
(73) Patentinhaber: REHAU AG + Co, 95111 Rehau (DE)
(72) Erfinder: Baumgärtel, Christof, c/o REHAU AG + Co, D-95111 Rehau (DE)

(56) Entgegenhaltungen:
- AT-B- 389 725
- DE-A- 1 906 785
- DE-A- 1 954 646
- DE-A- 2 410 256

## Beschreibung

Die Neuerung betrifft eine Vorrichtung zum wasserdichten Anschluß von Kunststoff-Kanalrohren an unterirdische Bauwerke, vorzugsweise an Inspektionsschächte in der Kanalisation, gemäß dem Oberbegriff des Anspruchs.

Aus der Deutschen Auslegeschrift 19 54 646 ist eine gegen Wasserdruck wirksame Dichtung von Mauerdurchführungen erdverlegter Rohrleitungen bekannt. Abgedichtet werden die Rohrenden bei Einmündungen in unterirdische Bauwerke wie Sammelbecken, Schächte und dergleichen. Aufgabe dieser bekannten Dichtung ist das Verhindern des Eindringens von Grundwasser in die unterirdischen Bauwerke.

Dieses Problem wird beim bekannten Stand der Technik derart gelöst, daß zwischen dem Mauerwerk und der Rohroberfläche eine Wickeldichtung angeordnet ist, die an ihrer Oberfläche eine Vielzahl geöffneter Poren aufweist. Die Wickeldichtung besteht aus einem geschlossenzellig geschäumten Kunststoffmaterial, welches ohne Verminderung der Dichtwirkung sämtliche Wärmedehnungsbelastungen aufnimmt. Im Einsatz geht die offenporige Oberfläche der Wickeldichtung eine innige Verbindung mit dem umgebenden Mauerwerk ein, die keinen Wasserdurchtritt zuläßt. Nachteilig bei dieser bekannten Wickeldichtung ist der Umstand, daß sich das in die Mauerdurchführung eingesetzte Steckende des Rohres bei Setzungserscheinungen beispielsweise des Schachtes nicht abwinkeln kann und damit erhebliche Scherspannungen auf das Rohr einwirken, die schließlich zum Bruch des Spitzendes führen können.

Aus einer Veröffentlichung der Firma ETERNIT mit dem Titel "Produktinfo Tiefbau Schachtfutter (FZ-F)" ist ein Schachtfutter bekannt, welches in symmetrischer Form in die Mauerdurchführung eingebracht wird. Mittig in diesem Schachtfutter ist ein umlaufender Dichtring angeordnet und zu beiden Seiten dieses Dichtrings vergrößert sich der Umfang des Schachtfutters fortlaufend in einer konischen Erweiterung. Das gesamte bekannte Schachtfutter ist konstruktiv so ausgelegt, daß nach dem Einbau in die Mauerdurchführung der in eine umlaufende, nach innen offene Nut des Schachtfutters eingesetzte Dichtring im Umfang geringfügig größer ausgelegt ist als der äußere Umfang des einzusteckenden Rohrendes. Damit ist gewährleistet, daß der Dichtring im Einbauzustand des Rohres fest und gegen Gas und Wasser abdichtend an der äußeren Oberfläche des Rohres anliegt. Die sich vom Dichtring aus erstreckenden konischen Erweiterungen des bekannten Schachtfutters ermöglichen es, daß sich das Steckende bei Setzungserscheinungen des Schachtes abwinkeln kann, womit die schädlichen Scherspannungen verhindert oder zumindest abgemindert werden.

Der Nachteil dieser bekannten Lösung ist, daß bei der Ausbildung eines zur Rohrsohle passenden Schachtgerinnes ein vom Dichtring nach außen verlaufender Hohlraum entsteht, der zwischen dem Rohraußendurchmesser und dem Schachtfutter durch die vorgegebene Konizität an Volumen bis zum Schachtfutterende ständig zunimmt. Dieser Hohlraum muß nach dem Einbau des Rohrendes mit einer Dichtmasse verschlossen werden, um in dem Hohlraum zum Faulen neigende Ablagerungen zu verhindern.

Dieser Nachteil tritt vor allem beim Einsatz des Schachtfuttes in Fertigschächten in Erscheinung. Auch wenn dabei die Schachtsohle bündig zum auslaufenden Konus des Schachtfutters betoniert und der konisch verlaufende Spalt mit Dichtmasse verfüllt ist, entsteht am Auslauf des Rohrendes zwischen dem Schachtgerinne und der Rohrsohle ein Absatz, an dem sich Wasser und Schmutz sammeln kann.

Um diesen Nachteil an der Baustelle zu beheben, muß nachträglich die Schachtsohle bis zur Rohrsohle angehoben werden, was nur unter erheblichem Zeit- und Kostenaufwand möglich ist.

Hier setzt die Neuerung ein, die es sich zur Aufgabe gestellt hat, ein Schachtfutter anzugeben, das die zum Stand der Technik angegebenen Nachteile vermeidet und darüberhinaus eine Einschubbegrenzung für das Rohrende aufweisen soll. Neuerungsgemäß wird dazu vorgeschlagen, daß der der Schachtinnenseite zugewandte Schachtfutter-Teilbereich den äußeren Abmessungen des einzuschiebenden Kunststoff-Kanalrohres entsprechend zylindrisch ausgebildet ist und an seinem freien Ende einen Anschlag besitzt, dessen umlaufende Höhe der Wanddicke des Kunststoff-Kanalrohres weitgehend entspricht.

Das neuerungsgemäße Schachtfutter ist asymmetrisch derart gestaltet, daß nur die vom Schacht wegführende Seite des Schachtfutters konisch erweitert ist, um bekanntermaßen auftretende Setzungserscheinungen am Kunststoff-Kanalrohr spannungsarm ableiten zu können. Der der Schachtinnenseite zugewandte Teil des Schachtfutters ist neuerungsgemäß zylindrisch ausgebildet und dient so der Zentrierung des eingesteckten Rohrendes in diesem Bereich. Dieser Bereich des Schachtfutters besitzt neuerungsgemäß einen umlaufenden Anschlag, der bis zur Wanddicke des eingeschobenen Kunststoff-Kanalrohres in den lichten Innenraum des Schachtfutters vorsteht. Bei der Fertigung des unterirdischen Bauwerks kann nunmehr die Schachtsohle bündig bis zur äußeren Oberfläche des umlaufenden Anschlages betoniert werden, so daß nach dem Einschieben des Rohres von der Schachtaußenseite her ein kontinuierlicher, glatter und stoßfreier Übergang vom Innendurchmesser des Kunststoff-Kanalrohres zur Schachtsohle gewährleistet ist.

Neben diesem herausragenden Vorteil des neuerungsgemäßen Schachtfutters im Vergleich zu solchen Schachtfuttern nach dem Stand der Technik ergibt sich als weiterer Vorteil die nicht mehr vorhandene Bewegungsfreiheit des freien Rohrendes im Bereich der Schachtinnenseite.

Dadurch wird jede Bewegung des freien Rohrendes bei den nicht vermeidbaren Setzungserscheinungen solcher Bauwerke und damit einhergehend eine schädliche Spaltwirkung in diesem Bereich vermieden. Die einseitige Konizität des Schachtfutters an der vom Schacht wegführenden Seite reicht aus, um die bei den Setzungen auftretenden Scherspannungen über das Kunststoff-Kanalrohr aufzunehmen.

In der Zeichnung ist ein Ausführungsbeispiel des neuerungsgemäßen Schachtfutters schematisch dargestellt; es zeigt:
Fig.1 das Schachtfutter im Schnitt
Fig.2 das geschnittene Schachtfutter im Einbauzustand

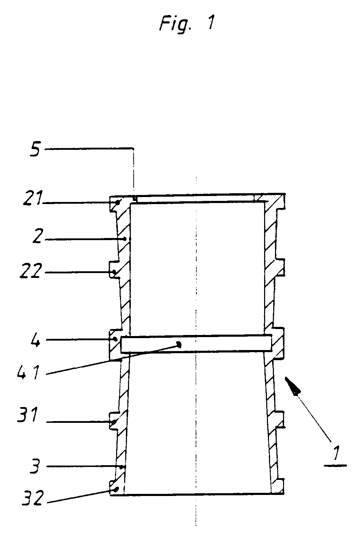

Fig.1 zeigt das Schachtfutter 1 mit dem zylindrisch ausgebildeten Innenteil 2 und dem vom Schacht wegführenden Außenteil 3. An der äußeren Oberfläche des Innenteils 2 und des Außenteils 3 sind Erhebungen 21, 22, 31, 32 angeformt, die beim Einsetzen des Schachtfutters 1 in den Mauerdurchbruch bei der Vermörtelung zur Abdichtung und als Ausreißsicherung dienen. Zusätzlich zu den Erhöhungen 21, 22, 31, 32 ist im mittleren Bereich beim Anschluß des Innenteils 2 an das Außenteil 3 eine weitere Erhöhung 4 angeformt, die einen nach innen zur lichten Weite des Schachtfutters 1 gerichteten, umlaufenden Aufnahmeraum 41 für den in dieser Zeichnung nicht gezeigten Dichtring besitzt.

Der Innenteil 2 besitzt an seinem zur Schachtsohle gerichteten freien Ende einen in den lichten Innenraum des Schachtfutters 1 ragenden Anschlag 5, der neuerungsgemäß als Anschlagbegrenzung für das in dieser Zeichnung nicht dargestellte Kunststoff-Kanalrohr dient.

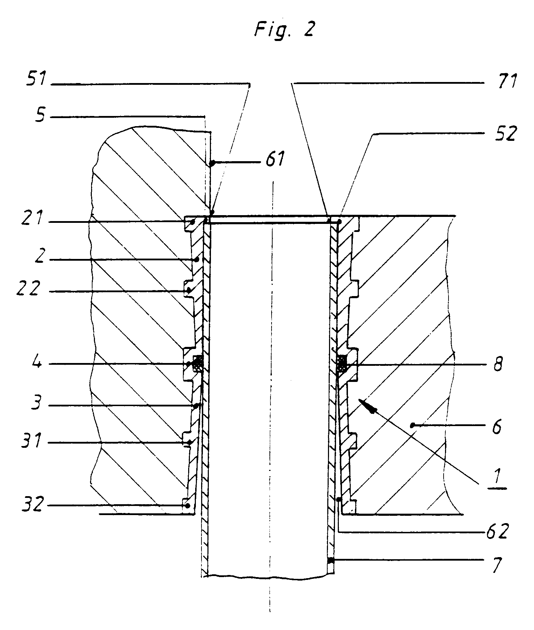

Fig.2 zeigt das geschnittene Schachtfutter 1 aus Fig.1 im Einbauzustand in die Schachtwand 6. Das Schachtfutter 1 ist derart in die Schachtwand 6 eingelassen, daß die Oberseite 51 des Anschlags 5 bündig mit der Schachtsohle 61 abschließt.

Das in das Schachtfutter 1 eingeschobene Kunststoff-Kanalrohr 7 ist so weit im Schachtfutter 1 vorgeschoben, bis die Stirnwand 71 des Kunststoff-Kanalrohres 7 an der inneren Oberfläche 52 des Anschlags 5 anstößt. Dieser Einschiebvorgang muß ab der Mitte des Schachtfutters 1 den Widerstand des Dichtrings 8 überwinden, der in die umlaufende Aufnahmenut 41 vor dem Einschieben des Rohrendes eingesetzt ist. Der Dichtring 8 übersteigt in seinem äußeren Umfang, der in den lichten Innenraum des Schachtfutters 1 geringfügig hineinragt, insofern den äußeren Umfang des Kunststoff-Kanalrohres und sorgt auf diese Weise für eine sichere Abdichtung durch die beim Einschieben des Kunststoff-Kanalrohres 7 in das Schachtfutter 1 auftretende Verpressung. Das Kunststoff-Kanalrohr 7 liegt nach dem Passieren des Dichtrings 8 mit seiner Außenwand am inneren Umfang des Schachtfutters 1 weitgehend an. Das Spiel zwischen dem Kunststoff-Kanalrohr 7 und dem inneren Umfang des Schachtfutters 1 ist auf das technisch notwendige Maß reduziert. Der von der Schachtsohle wegführende Teil 3 des Schachtfutters 1 ist - wie zum Stand der Technik geschildert - konisch erweitert. Durch den dadurch entstandenen Spalt 62 kann das Kunsttoff-Kanalrohr 7 bei Setzungserscheinungen des Schachtes entstehenden Scherspannungen aufnehmen.

## Patentansprüche

1. Vorrichtung zum wasserdichten Anschluß von Kanalrohren an Inspektionsschächte in der Kanalisation, bestehend aus einem in die Schachtwand eingelassenen Schachtfutter mit einer nach innen offenen, umlaufenden Mittelnut zur Aufnahme eines Dichtelementes und sich von der Mittelnut jeweils nach außen erstreckenden Schachtfutter-Teilbereichen, wobei der eine Schachtfutter-Teilbereich sich von der Mittelnut nach außen in der lichten Weite zunehmend vergrößert, dadurch gekennzeichnet, daß der andere Schachtfutter-Teilbereich (2) den äußeren Abmessungen des einzuschiebenden Kanalrohres (7) entsprechend zylindrisch ausgebildet ist und an seinem freien Ende einen Anschlag (5) besitzt, dessen umlaufende Höhe der Wanddicke des Kanalrohres (7) entspricht.

## Claims

1. System for watertight connection of sewage pipes to manhole shafts in the sewage system, consisting of a shaft lining recessed into the shaft wall with a continuous centre groove open to the inside of the shaft to take a sealing element, and partial shaft lining sections extending on each side from the centre groove, whereby the inside diameter of one partial shaft lining section increases gradually away from the centre groove, characterised in that the other partial shaft lining section (2) is formed cylindrically to correspond to the outside dimensions of the sewage pipe (7) to be connected and has an annular stop (5) at its free end, the height of which corresponds to the wall thickness of the sewage pipe (7).

## Revendications

1. Dispositif de raccordement, étanche à l'eau, de tuyaux de canalisation aux puits de visite des égouts, comprenant un garnissage encastré dans la paroi du puits avec une rainure médiane sur toute la circonférence du puits, ouverte vers l'intérieur et destinée à recevoir un élément d'étanchéité et des zones partielles de garnissage du puits s'étendant vers l'extérieur à partir de la rainure médiane, le diamètre intérieur de l'une des zones partielles du garnissage du puits augmentant progressivement de la rainure médiane vers l'extérieur, caractérisé par le fait que l'autre zone partielle du garnissage du puits (2) présente une forme cylindrique, conformément aux dimensions extérieures du tuyau de canalisation (7) à insérer et possède à son extrémité libre une butée (5) dont la hauteur sur toute la circonférence correspond à l'épaisseur de paroi du tuyau de canalisation (7).
